# FASCICULE DE BREVET EUROPEEN

(11) **EP 3 976 953 B1**
(45) Date de publication et mention de la délivrance du brevet: **15.04.2026**
(21) Numéro de dépôt: 20727344.2
(22) Date de dépôt: 27.05.2020
(51) Int. Cl.: F02K 1/72, B64D 29/06, B64D 33/04, F02K 1/76

(54) **ENSEMBLE PROPULSIF D'AÉRONEF**
FLUGZEUGANTRIEBSANORDNUNG
AIRCRAFT PROPULSION ASSEMBLY

(30) Priorité: 28.05.2019 FR 1905675
(43) Date de publication de la demande: 06.04.2022
(73) Titulaire: Safran Nacelles, 76700 Gonfreville l'Orcher (FR); SAFRAN AIRCRAFT ENGINES, 75015 Paris (FR)
(72) Inventeur: BOILEAU, Patrick, 77550 MOISSY CRAMAYEL (FR); CARUEL, Pierre, 77550 MOISSY CRAMAYEL (FR); FERRIER, Gina, 77550 MOISSY CRAMAYEL (FR); GARNAUD, Quentin, 77550 MOISSY-CRAMAYEL (FR); GLEMAREC, Guillaume, 77550 MOISSY-CRAMAYEL (FR)
(74) Mandataire: Germain Maureau
(86) Numéro de dépôt international: PCT/EP2020/064763
(87) Numéro de publication internationale: WO 2020/239870

(56) Documents cités:
- EP-A2- 2 466 101
- EP-A2- 2 466 101
- WO-A1-2015/101758
- WO-A1-2015/101758
- WO-A1-2017/134402
- WO-A1-2017/134402
- US-A- 3 599 432
- US-A- 5 054 285
- US-A- 5 054 285
- US-A1- 2017 260 928
- US-A1- 2017 260 928

## Description

La présente invention concerne un ensemble propulsif d'aéronef.

Un aéronef est mû par un ou plusieurs turboréacteurs logés chacun dans au moins une nacelle. La nacelle présente généralement une structure tubulaire comprenant une section d'entrée d'air en amont du turboréacteur, une section médiane destinée à entourer une soufflante du turboréacteur, une section aval abritant les moyens d'inversion de poussée. La section aval de la nacelle entoure le générateur de gaz du turboréacteur qui est terminé par une tuyère d'éjection située en aval du turboréacteur. La section d'entrée d'air de la nacelle comporte notamment une lèvre avant de forme générale annulaire qui intercepte le flux d'air d'entrée de la nacelle qui est dirigé vers une soufflante. L'allongement de la lèvre avant de la nacelle est notamment recherché pour des raisons aérodynamiques, afin d'étendre vers l'aval la zone d'écoulement d'air laminaire. Mais son allongement n'est pas sans répercussion sur la conception du reste de la nacelle. Particulièrement, la nacelle doit présenter des performances de rigidité mécanique de manière à réduire ses déformations lors des sollicitations en fonctionnement.

L'état de la technique comprend, par exemple, US2017/260928 A1, WO 2015/101758 A1 et EP 2466101 A2.

Dans le brevet FR3004700, une nacelle pour turboréacteur d'aéronef à lèvre avant étendue est décrite. Cette nacelle pour turboréacteur d'aéronef comporte une enveloppe intérieure sensiblement cylindrique, une enveloppe extérieure sensiblement cylindrique, une cloison aval et une cloison amont solidaires de ladite enveloppe intérieure, et une lèvre avant disposée en avant de la dite cloison amont, l'enveloppe intérieure étant du genre comportant une partie amont comportant une virole acoustique reliée par une bride d'attache à une partie aval comportant un carter de soufflante. La lèvre avant est étendue et disposée par-dessus la cloison amont en présentant un bord aval entre les cloisons amont et aval pour venir se solidariser avec un bord homologue de l'enveloppe extérieure de manière à conserver l'accès de maintenance à ladite bride d'attache.

La cloison aval relie les capots de soufflante présents sur l'enveloppe extérieure, au carter de soufflante présent sur l'enveloppe intérieure. Cette cloison aval est disposée à la limite de la zone escamotée de l'inverseur de poussée.

L'utilisation d'une telle cloison présente cependant un inconvénient qui est celui de nécessiter un volume utile ou encombrement pour son intégration entre les enveloppes intérieure et extérieure qui implique d'augmenter la dimension longitudinale de la nacelle, d'autant plus lorsque la nacelle est du type comportant un inverseur de poussée à grilles coulissantes, condamnant ainsi la possibilité de raccourcir la nacelle.

La présente invention vise à remédier à cet inconvénient en fournissant un ensemble propulsif d'aéronef selon la revendication 1 et comprenant une nacelle et un turboréacteur, ladite nacelle comprenant une enveloppe extérieure comportant des capots de soufflante, ledit turboréacteur comportant au moins un carter de soufflante, lesdits capots de soufflante et l'au moins un carter de soufflante étant reliés par au moins une structure support et configurés pour délimiter un espace intérieur destiné à loger des grilles d'un inverseur de poussée à grilles coulissantes, ledit inverseur de poussée étant configuré pour être déplacé entre une première position, correspondant à une position dans laquelle l'inverseur est escamoté, ne produisant pas d'inversion de poussée et une deuxième position, correspondant à une position dans laquelle l'inverseur est déployé, permettant une inversion de poussée, par au moins un actionneur, l'ensemble propulsif étant remarquable en ce que ladite structure support comprend au moins un ajourage configuré pour permettre le passage d'une partie ou de la totalité de l'au moins un actionneur.

L'avantage de cette caractéristique est que la structure support intègre une partie du volume de l'inverseur de poussée. L'inverseur de poussée est donc disposé plus en amont de l'ensemble propulsif et l'ensemble propulsif peut donc être raccourci. L'ensemble propulsif comprend au moins un premier carter de soufflante et un deuxième carter de soufflante, le deuxième carter de soufflante étant disposé en aval dudit premier carter de soufflante.

L'au moins un actionneur comprend au moins une ferrure configurée pour se fixer au deuxième carter de soufflante au niveau d'au moins une bride, nommée bride pour actionneur.

La fixation de la ferrure sur l'au moins une bride pour actionneur assure une prise d'au moins une partie de la charge de l'au moins un actionneur sur le deuxième carter de soufflante.

Avantageusement, une partie de l'au moins un actionneur traverse ledit ajourage correspondant sans être en contact avec ladite structure support.

Le fait qu'une partie de l'au moins un actionneur traverse l'au moins un ajourage correspondant sans être en contact avec la structure support, évite que celle-ci ne reprenne la charge de l'au moins un actionneur. La fonction de la structure support est donc dédiée au supportage des capots de soufflante.

Avantageusement encore, la structure support est configurée pour se fixer à l'au moins un carter de soufflante au niveau d'une bride, nommée bride pour structure support, ladite structure support présentant un profil configuré pour lui permettre de se fixer sur une zone choisie desdits capots de soufflante en vue d'assurer une bonne tenue mécanique dans le temps.

Ce profil permet d'adapter la configuration de la structure support pour la fixer aux capots de soufflante dans la zone souhaitée tout en prenant en compte le volume de l'inverseur de poussée.

Avantageusement encore, le profil de la structure support comprend au moins une inclinaison, l'au moins une inclinaison permettant un décalage selon un axe longitudinal de l'ensemble propulsif, entre une première portion et une deuxième portion radiales de la structure support.

Notamment, l'au moins une structure support a une forme sensiblement de S, une forme conique ou une forme en biseau, selon un axe longitudinal de l'ensemble propulsif.

Selon une possibilité, l'au moins une structure support comprend au moins une partie disposée longitudinalement au niveau de l'au moins un carter de soufflante.

Ainsi, cette structure support permet, le cas échéant, de constituer une interface supplémentaire pour les capots de soufflante non contraignante dans l'environnement moteur.

Selon une autre possibilité, l'au moins une structure support est configurée pour relier les capots de soufflante et l'au moins un carter de soufflante sur la circonférence dudit au moins un carter de soufflante, ladite structure support étant continue sur 360°.

Cette caractéristique permet à la structure support de supporter les capots de soufflante sur le pourtour de l'au moins un carter de soufflante, offrant un supportage efficace.

Selon une autre possibilité, l'au moins une structure support est circonférentiellement discontinue.

Cette configuration discontinue de la structure support permet d'alléger son poids et donc d'alléger le poids de l'ensemble propulsif.

Dans un autre mode de réalisation, l'au moins un actionneur est solidaire de la structure support.

Cette solidarité entre le structure support et l'au moins un actionneur peut être réalisée par l'intermédiaire d'un cardan.

Ceci permet à la structure support de reprendre une partie de la charge de l'au moins un actionneur. Ainsi, la structure support participe à la reprise du chemin d'effort subi par l'au moins un actionneur.

Notamment encore, l'au moins une structure support comporte une paroi supplémentaire.

Cette paroi supplémentaire vise à renforcer le supportage des capots de soufflante.

Selon une autre possibilité, l'au moins un actionneur est un vérin.

Selon une autre possibilité encore, la structure support comprend deux parties, une première partie étant fixée aux capots de soufflante et une deuxième partie étant fixée à l'au moins un carter de soufflante, lesdites premières et deuxièmes parties étant reliées entre elles par une structure en treillis.

La structure en treillis permet de former des ajourages configurés pour recevoir chaque actionneur de l'inverseur de poussée.

Dans un mode de réalisation, la structure support est fixée à la bride pour structure support par l'intermédiaire d'une pièce complémentaire.

La pièce complémentaire permet à la structure support d'être déportée sans impacter l'intégrité du moteur.

Dans un autre mode de réalisation, l'au moins une structure support est formée d'un seul tenant avec l'au moins un carter de soufflante.

Dans un autre mode de réalisation encore, la structure support est fixée aux capots de soufflante de manière amovible.

Cette fixation démontable de la structure support sur les capots de soufflante assure un transfert d'effort entre les capots de soufflante et l'au moins un carter de soufflante. Selon un autre mode de réalisation, l'au moins une structure support comporte au moins un orifice.

Cela assure une ventilation à l'intérieur de la nacelle et notamment entre les différents compartiments formés par l'au moins une structure support.

L'invention sera décrite plus en détails à travers les différentes figures présentées ci-dessous, ce qui facilitera sa compréhension.
[Fig.1] représente une vue partielle en coupe selon un axe longitudinal d'un ensemble propulsif selon un mode de réalisation de l'invention.
[Fig.2] représente une vue similaire à la figure 1, d'une partie d'un ensemble propulsif selon un autre mode de réalisation de l'invention.
[Fig.3] représente une vue similaire à la figure 1, d'une partie d'un ensemble propulsif selon un autre mode de réalisation de l'invention.
[Fig.4a] représente une vue partielle en coupe selon l'axe longitudinal, de la structure support, selon un mode de réalisation de l'invention.
[Fig.4b] est une vue partielle en coupe selon l'axe longitudinal, du vérin, selon le mode de réalisation de la figure 4a.
[Fig.5a] est une vue en coupe selon l'axe longitudinal, de la structure support, selon un mode de réalisation de l'invention.
[Fig.5b] est une vue partielle en coupe selon l'axe longitudinal, du vérin, selon le mode de réalisation de la figure 5a.
[Fig.6] est une vue partielle en coupe selon l'axe longitudinal, d'une structure support, selon un autre mode de réalisation de l'invention.
[Fig.7] est une vue partielle en coupe selon l'axe longitudinal, du vérin, selon un autre mode de réalisation de l'invention.
[Fig.8] est une vue en perspective partielle de la fixation de la structure support sur le premier carter de soufflante, selon un mode de réalisation de l'invention.
[Fig.9] est une vue en perspective de la fixation de la structure support sur les capots de soufflante, selon l'invention.

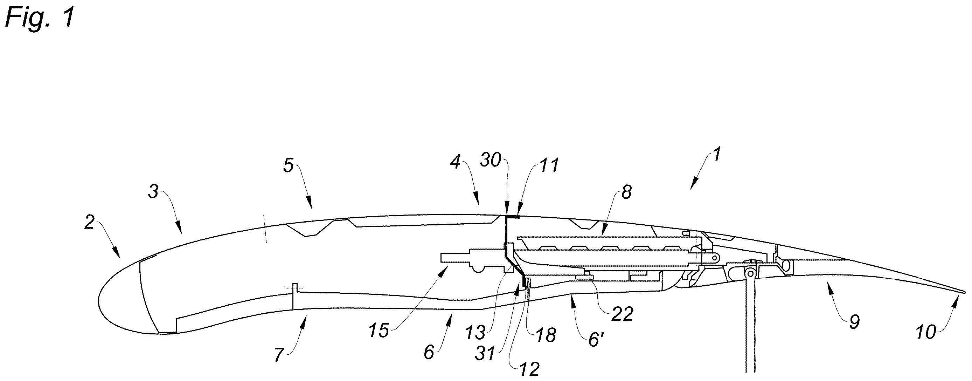

La figure 1 montre une vue partielle d'un ensemble propulsif 1 d'aéronef comprenant une nacelle comportant une lèvre d'entrée d'air 2, une entrée d'air 3, des capots de soufflante 4 disposés sur l'enveloppe extérieure 5 de la nacelle, et un turboréacteur comprenant un premier carter de soufflante 6 et un deuxième carter de soufflante 6' disposé en aval du premier carter de soufflante 6 selon un axe longitudinal de l'ensemble propulsif 1, un inverseur de poussée 8, ici à grilles coulissantes, une tuyère primaire 9 et un cône d'éjection des gaz 10. L'amont de l'ensemble propulsif 1 se situe au niveau de la lèvre d'entrée d'air 2 et l'aval de l'ensemble propulsif 1 se situe au niveau du cône d'éjection des gaz 10.

L'inverseur de poussée 8 à grilles coulissantes est en position escamotée, c'est-à-dire en position de repos. La position escamotée est la position dans laquelle l'inverseur de poussée n'intervient pas sur l'écoulement issu de la soufflante. Dans cette position, l'inverseur de poussée 8 est sous l'enveloppe extérieure 5, et plus précisément logé entre les enveloppes intérieure 7 et extérieure 5.

A la différence, lorsque l'inverseur de poussée 8 est en position déployée, l'écoulement issu de la soufflante est inversé et évacué à l'extérieur de l'enveloppe extérieure 5.

Une structure support 11, est disposée au niveau d'une zone de repos de l'inverseur de poussée 8, c'est-à-dire une zone accueillant l'inverseur de poussée 8 en position de repos. De préférence cette structure de support 11 est située à une extrémité amont de cette zone de repos. Cette structure support 11 est configurée pour relier les capots de soufflante 4 au premier carter de soufflante 6.

Plus précisément, une première portion 30 de la structure support 11 se fixe aux capots de soufflante 4 et une deuxième potion 31 de la structure support 11 se fixe au carter de soufflante 6.

La structure support 11 se fixe au premier carter de soufflante 6 par l'intermédiaire d'une bride 12 pour structure support.

Le deuxième carter de soufflante 6' comprend également une première bride 18 pour actionneur et une deuxième bride 22 pour actionneur située en aval de la première bride 18 pour actionneur.

Sur cette figure, la structure support 11 a une forme sensiblement de S selon cette coupe longitudinale de l'ensemble propulsif 1, de manière à ce que la structure support 11 intègre le volume de l'inverseur de poussée 8 tout en se fixant sur le premier carter de soufflante 6 et sur les capots de soufflante 4 aux endroits prévus pour assurer une bonne tenue mécanique dans le temps.

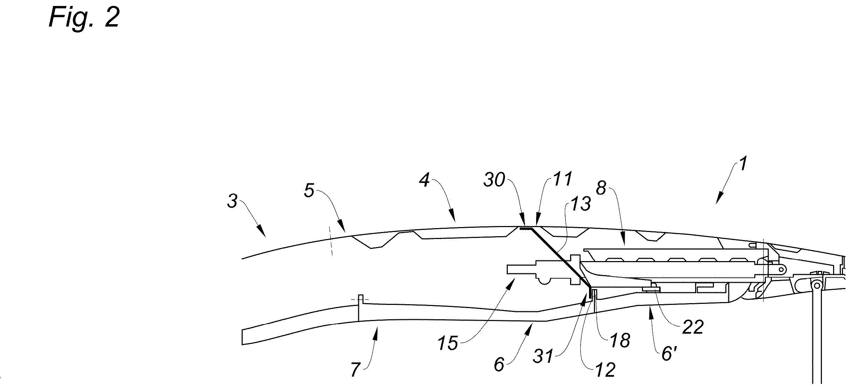

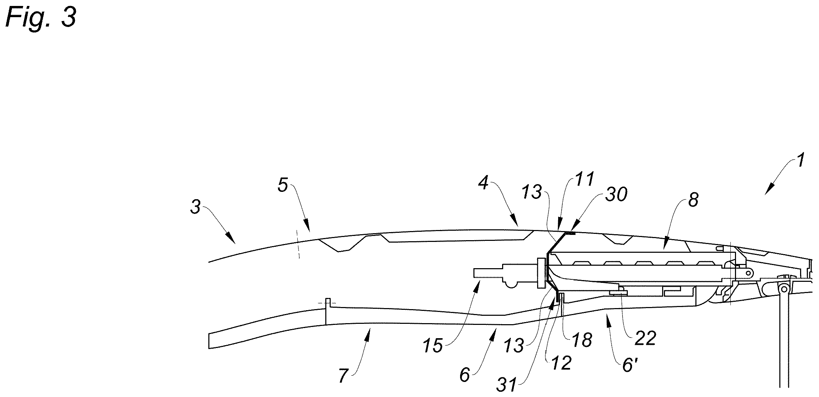

La structure support 11, comme illustrée sur les figures 2 et 3, peut avoir une forme différente.

En effet, la structure support 11 est configurée pour s'adapter à des contraintes physiques de l'ensemble propulsif 1, notamment au volume dudit inverseur de poussée 8 ainsi qu'aux points de fixation de ladite structure support 11 sur lesdits capots de soufflante 4 et ledit premier carter de soufflante 6.

Sur les figures 1, 2 et 3, la bride 12 pour structure support, permettant la fixation de la structure support 11 sur le premier carter de soufflante 6 n'est pas en regard de la position de fixation de la structure support 11 sur les capots de soufflante 4.

La structure support 11 présente donc au moins une inclinaison 13 offrant la possibilité à la structure support 11 de se fixer sur les capots de soufflante 4 à l'endroit souhaité, tout en respectant le volume de l'inverseur de poussée 8.

En effet, le décalage longitudinal de la structure support 11, créé par l'au moins une inclinaison 13, permet de fixer la deuxième portion 31 de la structure support 11 sur le carter de soufflante 6 en amont ou en aval par rapport à la fixation de la première portion 30 de la structure support 11 sur les capots de soufflante 4.

Sur la figure 2, la structure support 11 a une forme sensiblement en S, selon la coupe longitudinale de l'ensemble propulsif 1, le S étant dans le sens inverse par rapport à celui de la figure 1.

Sur la figure 3, la structure support 11 a une forme sensiblement conique.

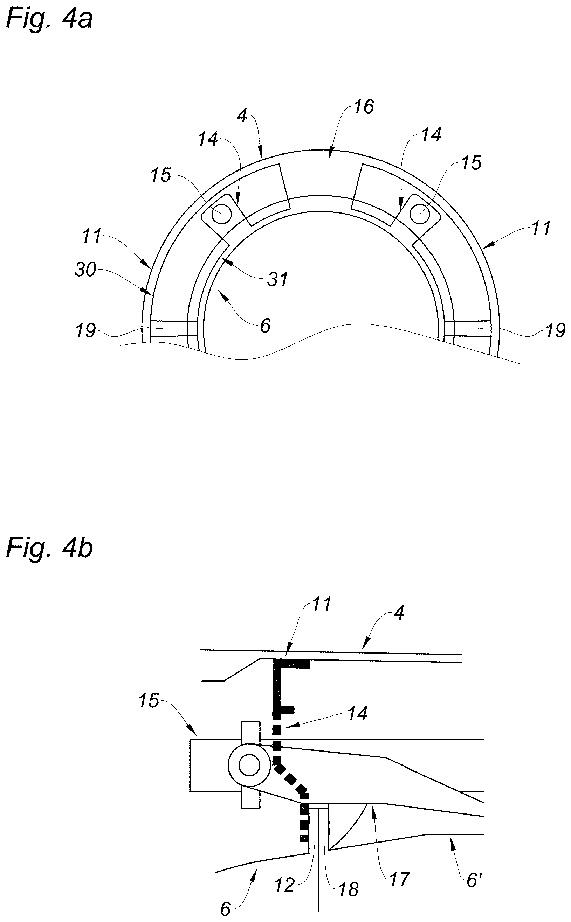

La figure 4a montre la structure support 11 reliant les capots de soufflante 4 au premier carter de soufflante 6.

La structure support 11 est disposée sur la circonférence du premier carter de soufflante 6.

Il n'est pas exclu que la structure 11 soit également disposée longitudinalement, au moins en partie, le long de l'axe longitudinal du deuxième carter de soufflante 6', garantissant une meilleure tenue des capots de soufflante 4.

La structure support 11 présente des ajourages 14 configurés pour recevoir un actionneur 15 correspondant, ici un vérin, de l'inverseur de poussée 8.

Ces ajourages 14 peuvent être formés par des fenêtres ou des ouvertures ménagées dans la structure support 11.

La structure support 11 comporte des renforts 19 configurés pour renforcer le supportage d'équipements tels que des éléments TRAS, EBU et/ou FADEC.

Les éléments TRAS sont des modules de commande. Les éléments FADEC sont des unités de régulation électronique à pleine autorité et les EBU sont des éléments tels que des systèmes hydrauliques ou des systèmes fuel.

La structure support 11 est ici discontinue comme le montre la fracture 16.

Bien entendu, toutes les discontinuités possibles sont envisageables.

Il est à noter que les ajourages 14 peuvent également être formés par la ou les discontinuités de la structure support 11, disposées en regard de l'actionneur 15.

La figure 4b montre l'actionneur 15 selon le mode de réalisation présenté à la figure 4a. L'actionneur 15 est un vérin comportant une ferrure 17 se fixant à la première bride 18 pour actionneur, disposée sur le deuxième carter de soufflante 6', supportant ainsi la charge de l'actionneur 15.

La structure support 11, reliant les capots de soufflante 4 au premier carter de soufflante 6 par la bride 12 pour structure support, présente un ajourage 14.

L'actionneur 15 est configuré pour traverser cet ajourage 14 de manière à ce que la structure support 11 ne soit pas en contact avec l'actionneur 15.

Autrement dit, un espacement existe de part et d'autre de l'actionneur 15 par rapport à la structure support 11, formant cet ajourage 14.

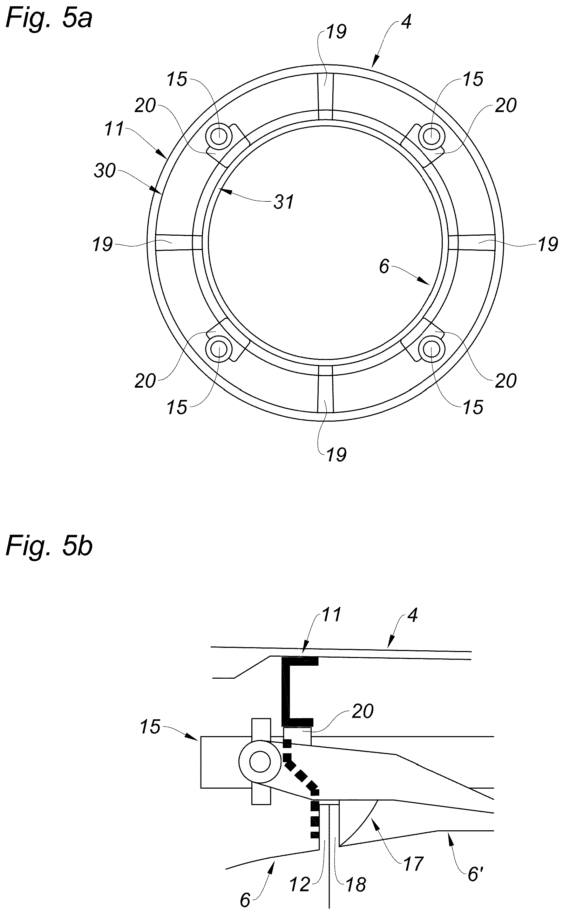

Dans un autre mode de réalisation de l'invention, représenté à la figure 5a, les quatre actionneurs 15 de l'inverseur de poussée 8 sont solidaires de la structure support 11.

Cette fixation de chaque actionneur 15, ici des vérins, est réalisée par l'intermédiaire d'un cardan (non représenté).

La structure support 11 comporte les renforts 19 ainsi que des renforts supplémentaires 20 améliorant la solidarité entre chaque actionneur 15 et la structure support 11.

La figure 5b montre l'actionneur 15 selon le mode de réalisation présenté à la figure 5a. A la différence du mode de réalisation présenté précédemment, l'actionneur 15 est lié à la structure support 11 par un cardan (non représenté).

De plus, des renforts supplémentaires 20 garantissent la liaison entre chaque actionneur 15 et la structure support 11.

La ferrure 17 reprend une partie de la charge de l'actionneur 15, comme le fait également le deuxième carter de soufflante 6' par sa fixation à la ferrure 17 sur la première bride 18 pour actionneur.

Les zones de la structure support 11 liées à l'actionneur 15 sont renforcées par des renforts supplémentaires 20 tels que des raidisseurs ou des épaisseurs plus grande.

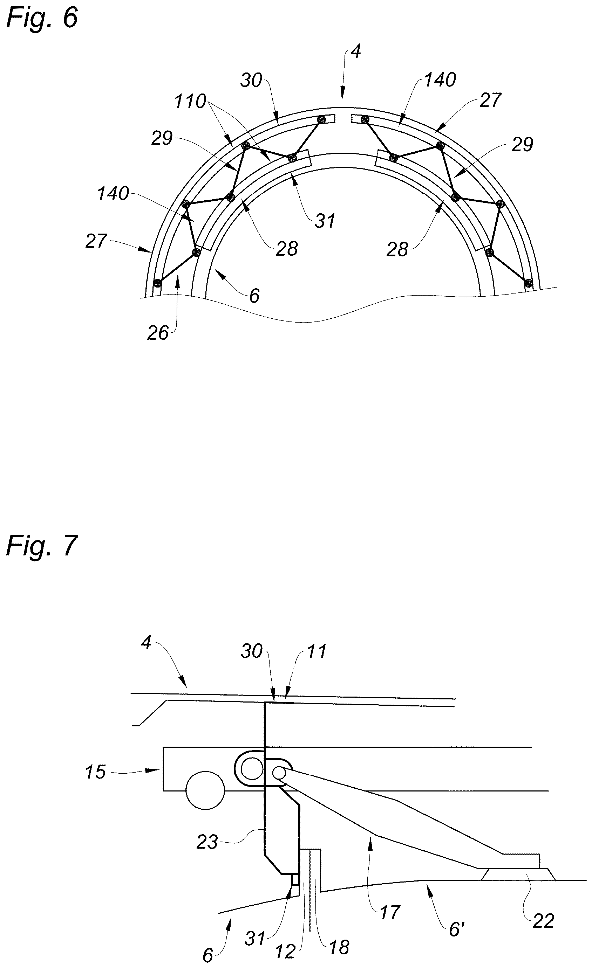

La figure 6 montre une structure support 110 reliant les capots de soufflante 4 au premier carter de soufflante 6 par l'intermédiaire d'une structure en treillis 26.

A la différence de la structure support 11 des figures 1 à 5b, la structure support 110 se compose en deux parties, une première partie 27 étant fixée aux capots de soufflante 4 et une deuxième partie 28 étant fixée au premier carter de soufflante 6.

La première partie 27 et la deuxième partie 28 de la structure support 110 sont reliées entre elles par la structure en treillis 26, comprenant une pluralité de bras 29.

Des ajourages 140, délimités par la structure en treillis 26, sont configurés pour recevoir l'actionneur 15 de l'inverseur de poussée 8.

En effet, les ajourages 140 sont formés par les bras 29 de la structure en treillis 26 et chaque actionneur 15 est configuré pour s'insérer entre les bras 29.

Il est à noter que les premières 27 et deuxièmes parties 28 de la structure support 110 peuvent s'étendre de manière continue sur 360°ou de manière discontinue sur la circonférence respectivement des capots de soufflante 4 et du premier carter de soufflante 6.

Bien entendu, les premières 27 et deuxièmes parties 28 de la structure support 110 peuvent être décalées les unes par rapport aux autres, selon l'axe longitudinal. En effet, la première partie 27 en regard de la deuxième partie 28 de la structure support 110, comme illustrée sur cette figure, n'est pas limitatif de l'invention.

Encore selon un autre mode de réalisation, illustré à la figure 7, l'actionneur 15 est solidaire de la structure support 11. La ferrure 17 est fixée au deuxième carter de soufflante 6' sur la deuxième bride 22 pour actionneur selon cet autre mode de réalisation, située longitudinalement en aval de la bride 12 pour structure support et de la première bride 18 pour actionneur selon le mode de réalisation de la figure 4b, reprenant ainsi les charges axiales de l'actionneur 15.

De plus, la structure support 11 comprend un renforcement, constitué d'une paroi supplémentaire 23.

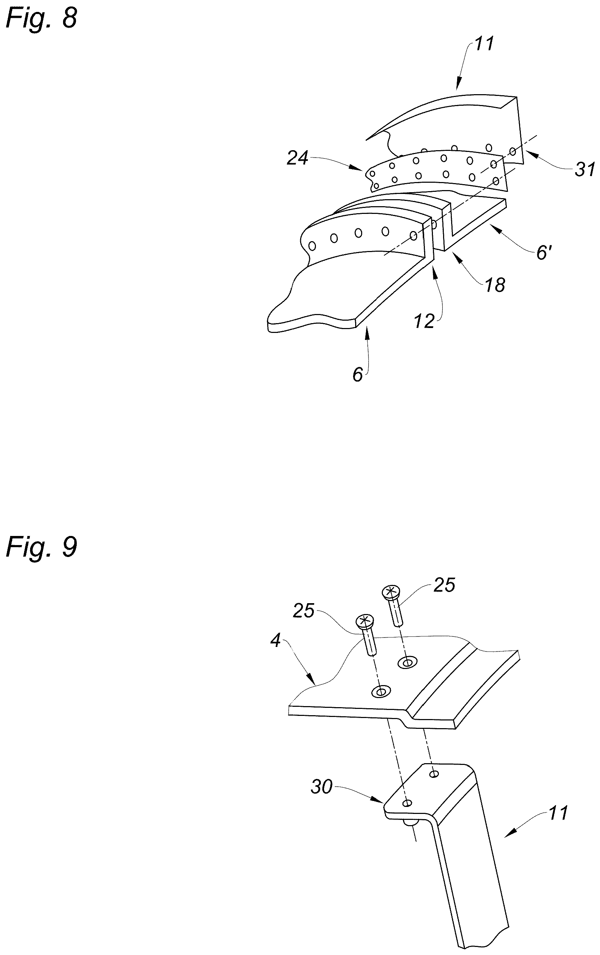

La figure 8 montre la fixation de la structure support 11 sur le premier carter de soufflante 6. Cette fixation est réalisée sur les brides 12 pour structure support et 18 pour actionneur, par l'intermédiaire d'une pièce complémentaire 24. La structure support 11 n'est donc pas en contact direct avec la bride 12 pour structure support mais fixée indirectement par cette pièce complémentaire 24.

En effet, la structure support est fixée au premier carter de soufflante 6 par l'intermédiaire de la pièce complémentaire 24, qui est fixée sur les brides 12 pour structure support et 18 pour actionneur.

La pièce complémentaire 24 permet à la structure support 11 d'être déportée sans impacter l'intégrité du moteur.

Bien entendu, la structure support 11 peut être fixée directement sur la bride 12 pour structure support, sans pièce complémentaire 24.

De plus, la structure support 11 peut être monobloc avec le premier carter de soufflante 6, c'est-à-dire que la structure support 11 et le premier carter de soufflante 6 sont formés d'un seul tenant.

De manière non représentée, la structure support 110 selon le mode de réalisation de la figure 6 est fixée au premier carter de soufflante 6 de la même manière.

La figure 9 montre la fixation de la structure support 11 sur les capots de soufflante 4. La structure support 11 est liée aux capots de soufflante 4 par des moyens de fixation amovibles 25, ici deux ensemble vis - écrou. Ces moyens de fixation amovibles 25 peuvent être différents, tels que des rivets.

Cette liaison est effectuée directement sur les capots de soufflante 4.

Ces moyens de fixation amovibles 25 assurent un transfert d'efforts selon tous les degrés de liberté de la structure support 11 sur les capots de soufflante 4, offrant ainsi un transfert d'effort entre les capots de soufflante 4 et le premier carter de soufflante 6.

De manière non représentée, la structure support 110 selon le mode de réalisation de la figure 6 est fixée aux capots de soufflante 4 de la même manière

A présent, les différents avantages de ces structures supports 11 et 110 sont présentés ci-après.

Les structures supports 11 et 110 participent donc au chemin d'effort radial et longitudinal entre les capots de soufflante 4 et le premier carter de soufflante 6.

Ces structures supports 11 et 110 permettent de s'adapter au volume de l'inverseur de poussée 8 à grilles coulissantes, en prenant en compte le ou les actionneurs 15 configurés pour déplacer l'inverseur de poussée 8 d'une position escamotée à une position déployée, tout en s'accommodant à la fixation de ces structures supports 11 et 110 sur le premier carter de soufflante 6 par l'intermédiaire de la bride 12 pour structure support. En effet, cette bride 12 n'est pas toujours en regard du point de fixation des capots de soufflante 4.

De plus ces structures supports 11 et 110 sont étanches et peuvent comporter un ou des orifices assurant une ventilation des différents compartiments séparés par ces structures supports 11 et 110.

Ces structures supports 11 et 110 peuvent également reprendre une partie de la charge du ou des actionneurs 15 de l'inverseur de poussée 8 lorsque ce ou ces actionneurs 15 sont solidaires des structures supports 11 et 110.

Enfin, ces structures supports 11 et 110 peuvent supporter des éléments TRAS, FADEC ou encore des éléments EBU.

## Revendications

1. Ensemble propulsif (1) d'aéronef comprenant une nacelle et un turboréacteur, ladite nacelle comprenant une enveloppe extérieure (5) comportant des capots de soufflante (4), ledit turboréacteur comportant au moins un carter de soufflante (6, 6'), lesdits capots de soufflante (4) et l'au moins un carter de soufflante (6, 6') étant reliés par au moins une structure support (11, 110) et configurés pour délimiter un espace intérieur destiné à loger des grilles d'un inverseur de poussée (8) à grilles coulissantes, ledit inverseur de poussée (8) étant configuré pour être déplacé entre une première position et une deuxième position par au moins un actionneur (15), l'ensemble propulsif (1) étant remarquable en ce que l'au moins une structure support (11, 110) comprend au moins un ajourage (14, 140) configuré pour permettre le passage d'une partie de l'au moins un actionneur (15), **caractérisé en ce que** l'ensemble propulsif comprend au moins un premier carter de soufflante (6) et un deuxième carter de soufflante (6'), ledit deuxième carter de soufflante (6') étant disposé en aval dudit premier carter de soufflante (6), l'au moins un actionneur (15) comprenant au moins une ferrure (17) configurée pour se fixer au deuxième carter de soufflante (6') au niveau d'au moins une bride (18, 22), nommée bride pour actionneur.

2. Ensemble propulsif (1) selon la revendication 1, **caractérisé en ce qu'**une partie de l'au moins un actionneur (15) traverse ledit ajourage (14, 140) correspondant sans être en contact avec ladite structure support (11, 110).

3. Ensemble propulsif (1) selon l'une quelconque des revendications 1 ou 2, **caractérisé en ce que** la structure support (11, 110) est configurée pour se fixer à l'au moins un carter de soufflante (6, 6') au niveau d'une bride (12), nommée bride pour structure support, ladite structure support (11, 110) présentant un profil comprenant au moins une inclinaison (13), l'au moins une inclinaison (13) permettant un décalage selon un axe longitudinal de l'ensemble propulsif (1), entre une première portion (30) et une deuxième portion (31) radiales de la structure support.

4. Ensemble propulsif (1) selon l'une quelconque des revendications précédentes, **caractérisé en ce que** l'au moins une structure support (11, 110) a une forme sensiblement de S, une forme conique ou une forme en biseau, selon un axe longitudinal de l'ensemble propulsif (1).

5. Ensemble propulsif (1) selon l'une quelconque des revendications précédentes, **caractérisé en ce que** l'au moins une structure support (11, 110) comprend au moins une partie disposée longitudinalement au niveau de l'au moins un carter de soufflante (6, 6').

6. Ensemble propulsif (1) selon l'une quelconque des revendications 1 à 5, **caractérisé en ce que** l'au moins une structure support (11, 110) est configurée pour relier les capots de soufflante (4) et l'au moins un carter de soufflante (6, 6') sur la circonférence dudit au moins un carter de soufflante (6, 6'), ladite structure support (11) étant continue sur 360°.

7. Ensemble propulsif (1) selon l'une quelconque des revendications 1 à 5, **caractérisé en ce que** l'au moins une structure support (11, 110) est circonférentiellement discontinue.

8. Ensemble propulsif (1) selon la revendication 1, **caractérisé en ce que** l'au moins un actionneur (15) est solidaire de la structure support (11, 110).

9. Ensemble propulsif (1) selon l'une quelconque des revendications précédentes, **caractérisé en ce que** l'au moins un actionneur (15) est un vérin.

10. Ensemble propulsif (1) selon l'une quelconque des revendications précédentes, **caractérisé en ce que** la structure support (110) comprend deux parties, une première partie (27) étant fixée aux capots de soufflante (4) et une deuxième partie (28) étant fixée à l'au moins un carter de soufflante (6, 6'), lesdites premières et deuxièmes parties (27, 28) étant reliées entre elles par une structure en treillis (26).

11. Ensemble propulsif (1) selon l'une quelconque des revendications 3 à 10, **caractérisé en ce que** l'au moins une structure support (11, 110) est fixée à la bride (12) pour structure support par l'intermédiaire d'une pièce complémentaire (24).

12. Ensemble propulsif (1) selon l'une quelconque des revendications 1 à 10, **caractérisé en ce que** l'au moins une structure support (11, 110) est formée d'un seul tenant avec l'au moins un carter de soufflante (6, 6').

13. Ensemble propulsif (1) selon l'une quelconque des revendications précédentes, **caractérisé en ce que** l'au moins une structure support (11, 110) est fixée aux capots de soufflante (4) de manière amovible.

## Patentansprüche

1. Antriebsanordnung (1) für ein Flugzeug, die eine Gondel und ein Turbotriebwerk umfasst, wobei die Gondel eine Außenhülle (5) umfasst, die Gebläseabdeckungen (4) umfasst, wobei das Turbotriebwerk mindestens ein Gebläsegehäuse (6, 6') umfasst, wobei die Gebläseabdeckungen (4) und das mindestens eine Gebläsegehäuse (6, 6') durch mindestens eine Trägerstruktur (11, 110) verbunden und so ausgestaltet sind, dass sie einen Innenraum begrenzen, der dazu bestimmt ist, Gitter eines Schubumkehrers (8) mit Schiebegittern aufzunehmen, wobei der Schubumkehrer (8) so ausgestaltet ist, dass er durch mindestens einen Aktor (15) zwischen einer ersten Position und einer zweiten Position bewegt werden kann, wobei die Antriebsanordnung (1) dadurch bemerkenswert ist, dass die mindestens eine Trägerstruktur (11, 110) mindestens eine Öffnung (14, 140) umfasst, die so ausgestaltet ist, dass sie den Durchtritt eines Teils des mindestens einen Aktors (15) ermöglicht, **dadurch gekennzeichnet, dass** die Antriebsanordnung mindestens ein erstes Gebläsegehäuse (6) und ein zweites Gebläsegehäuse (6') umfasst, wobei das zweite Gebläsegehäuse (6') stromabwärts des ersten Gebläsegehäuses (6) angeordnet ist, wobei der mindestens eine Aktor (15) mindestens einen Beschlag (17) umfasst, der so ausgestaltet ist, dass er im Bereich mindestens eines als Aktorflansch bezeichneten Flansches (18, 22) am zweiten Gebläsegehäuse (6') befestigt werden kann.

2. Antriebsanordnung (1) nach Anspruch 1, **dadurch gekennzeichnet, dass** ein Teil des mindestens einen Aktors (15) durch die entsprechende Öffnung (14, 140) tritt, ohne mit der Trägerstruktur (11, 110) in Kontakt zu stehen.

3. Antriebsanordnung (1) nach einem der Ansprüche 1 oder 2, **dadurch gekennzeichnet, dass** die Trägerstruktur (11, 110) so ausgestaltet ist, dass sie im Bereich eines als Trägerstrukturflansch bezeichneten Flansches (12) an dem mindestens einen Gebläsegehäuse (6, 6') befestigt werden kann, wobei die Trägerstruktur (11, 110) ein Profil aufweist, das mindestens eine Neigung (13) umfasst, wobei die mindestens eine Neigung (13) eine Verschiebung entlang einer Längsachse der Antriebsanordnung (1) zwischen einem ersten radialen Abschnitt (30) und einem zweiten radialen Abschnitt (31) der Trägerstruktur ermöglicht.

4. Antriebsanordnung (1) nach einem der vorstehenden Ansprüche, **dadurch gekennzeichnet, dass** die mindestens eine Trägerstruktur (11, 110) entlang einer Längsachse der Antriebsanordnung (1) eine im Wesentlichen S-förmige Form, eine konische Form oder eine schräge Form aufweist.

5. Antriebsanordnung (1) nach einem der vorstehenden Ansprüche, **dadurch gekennzeichnet, dass** die mindestens eine Trägerstruktur (11, 110) mindestens einen Teil umfasst, der längs im Bereich des mindestens einen Gebläsegehäuses (6, 6') angeordnet ist.

6. Antriebsanordnung (1) nach einem der Ansprüche 1 bis 5, **dadurch gekennzeichnet, dass** die mindestens eine Trägerstruktur (11, 110) so ausgestaltet ist, dass sie die Gebläseabdeckungen (4) und das mindestens eine Gebläsegehäuse (6, 6') am Umfang des mindestens einen Gebläsegehäuses (6, 6') verbindet, wobei die Trägerstruktur (11) auf 360° durchgehend ist.

7. Antriebsanordnung (1) nach einem der Ansprüche 1 bis 5, **dadurch gekennzeichnet, dass** die mindestens eine Trägerstruktur (11, 110) in Umfangsrichtung nicht durchgehend ist.

8. Antriebsanordnung (1) nach Anspruch 1, **dadurch gekennzeichnet, dass** der mindestens eine Aktor (15) fest mit der Trägerstruktur (11, 110) verbunden ist.

9. Antriebsanordnung (1) nach einem der vorstehenden Ansprüche, **dadurch gekennzeichnet, dass** der mindestens eine Aktor (15) ein Zylinder ist.

10. Antriebsanordnung (1) nach einem der vorstehenden Ansprüche, **dadurch gekennzeichnet, dass** die Trägerstruktur (110) zwei Teile umfasst, wobei ein erster Teil (27) an den Gebläseabdeckungen (4) befestigt ist und ein zweiter Teil (28) an dem mindestens einen Gebläsegehäuse (6, 6') befestigt ist, wobei die ersten und die zweiten Teile (27, 28) durch eine Gitterstruktur (26) miteinander verbunden sind.

11. Antriebsanordnung (1) nach einem der Ansprüche 3 bis 10, **dadurch gekennzeichnet, dass** die mindestens eine Trägerstruktur (11, 110) mittels eines komplementären Teils (24) am Trägerstrukturflansch (12) befestigt ist.

12. Antriebsanordnung (1) nach einem der Ansprüche 1 bis 10, **dadurch gekennzeichnet, dass** die mindestens eine Trägerstruktur (11, 110) einstückig mit dem mindestens einen Gebläsegehäuse (6, 6') gebildet ist.

13. Antriebsanordnung (1) nach einem der vorstehenden Ansprüche, **dadurch gekennzeichnet, dass** die mindestens eine Trägerstruktur (11, 110) abnehmbar an den Gebläseabdeckungen (4) befestigt ist.

## Claims

1. A propulsion unit (1) of an aircraft comprising a nacelle and a turbojet engine, said nacelle comprising an outer envelope (5) comprising fan cowls (4), said turbojet engine including at least one fan casing (6, 6'), said fan cowls (4) and the at least one fan casing (6, 6') being connected by at least one support structure (11, 110) and configured to delimit an inner space intended to house cascades of a sliding cascade thrust reverser (8), said thrust reverser (8) being configured to be moved between a first position and a second position by at least one actuator (15), the propulsion unit (1) being notable in that the at least one support structure (11, 110) comprises at least one aperture (14, 140) configured to allow the passage of a part of the at least one actuator (15), **characterized in that** the propulsion unit comprises at least a first fan casing (6) and a second fan casing (6'), said second fan casing (6') being arranged downstream of said first fan casing (6), the at least one actuator (15) comprising at least one fitting (17) configured to attach to the second fan casing (6') at at least one flange (18, 22), called an actuator flange.

2. The propulsion unit (1) according to claim 1, **characterized in that** a part of the at least one actuator (15) passes through said corresponding aperture (14, 140) without being in contact with said support structure (11, 110).

3. The propulsion unit (1) according to any one of claims 1 or 2, **characterized in that** the support structure (11, 110) is configured to attach to the at least one fan casing (6, 6') at a flange (12), called a support structure flange, said support structure (11, 110) having a profile comprising at least one inclination (13), the at least one inclination (13) allowing an offset along a longitudinal axis of the propulsion unit (1), between a first radial portion (30) and a second radial portion (31) of the support structure.

4. The propulsion unit (1) according to any one of the preceding claims, **characterized in that** the at least one support structure (11, 110) is substantially S-shaped, conical or bevel-shaped, along a longitudinal axis of the propulsion unit (1).

5. The propulsion unit (1) according to any one of the preceding claims, **characterized in that** the at least one support structure (11, 110) comprises at least one part arranged longitudinally at the at least one fan casing (6, 6').

6. The propulsion unit (1) according to any one of claims 1 to 5, **characterized in that** the at least one support structure (11, 110) is configured to connect the fan cowls (4) and the at least one fan casing (6, 6') on the circumference of said at least one fan casing (6, 6'), said support structure (11) being continuous over 360°.

7. The propulsion unit (1) according to any one of claims 1 to 5, **characterized in that** the at least one support structure (11, 110) is circumferentially discontinuous.

8. The propulsion unit (1) according to claim 1, **characterized in that** the at least one actuator (15) is solid with the support structure (11, 110).

9. The propulsion unit (1) according to any one of the preceding claims, **characterized in that** the at least one actuator (15) is a cylinder.

10. The propulsion unit (1) according to any one of the preceding claims, **characterized in that** the support structure (110) comprises two parts, a first part (27) being attached to the fan cowls (4) and a second part (28) being attached to the at least one fan casing (6, 6'), said first and second parts (27, 28) being connected to each other by a lattice structure (26).

11. The propulsion unit (1) according to any one of claims 3 to 10, **characterized in that** the at least one support structure (11, 110) is attached to the support structure flange (12) via a complementary part (24).

12. The propulsion unit (1) according to any one of claims 1 to 10, **characterized in that** the at least one support structure (11, 110) forms a single piece with the at least one fan casing (6, 6').

13. The propulsion unit (1) according to any one of the preceding claims, **characterized in that** the at least one support structure (11, 110) is removably attached to the fan cowls (4).
